# EUROPEAN PATENT SPECIFICATION

(11) **EP 2 748 496 B1**
(45) Date of publication and mention of the grant of the patent: **30.09.2015**
(21) Application number: 12759380.4
(22) Date of filing: 16.08.2012
(51) Int. Cl.: F16J 15/34

(54) **APPARATUS FOR PUMPING A FLUID**
VORRICHTUNG ZUM PUMPEN EINER FLÜSSIGKEIT
APPAREIL POUR POMPER UN FLUIDE

(30) Priority: 26.08.2011 FI 20115830
(43) Date of publication of application: 02.07.2014
(73) Proprietor: Sulzer Management AG, 8401 Winterthur (CH)
(72) Inventor: MANNINEN, Heikki, FI-35700 Vilppula (FI); PEURU, Jyri, FI-42700 Keuruu (FI)
(74) Representative: Intellectual Property Services GmbH
(86) International application number: PCT/EP2012/066012
(87) International publication number: WO 2013/030004

(56) References cited:
- JP-A- 60 037 462
- SE-B- 408 458

## Description

The present invention relates to an apparatus for pumping a fluid, especially to a slide ring seal used for sealing the shaft of apparatuses used for pumping fluids, such as liquid, gas or mixtures of the above and solids, especially for blowers and pumps. The invention may also be applied to axial sealing of the shafts of other apparatuses.

Slide ring seals have been used in centrifugal pumps, gas blowers and corresponding applications in which it has been necessary to prevent the flow of a fluid, i.e. a medium to be pumped in the direction of a rotating shaft. Centrifugal pumps are used for e.g. pumping clean liquids, dirty liquids and liquids containing a large amount of solids. In centrifugal pumps the shaft of the pump must be sealed for preventing axial flow so that the fluid to be pumped cannot end up, firstly on the bearings of the shaft, and secondly away from the product or pumping chamber or volute reserved for the fluid to be pumped.

In a centrifugal pump the sealing is located behind the spiral or volute of the pump, i.e. between the impeller wheel and the bearings of the pump. There is a number of seal types. Most probably the first seals were packing seals in which sealing rope or sealing rings are located inside a packing box surrounding the shaft. Additionally, grease could be used in the sealing either with the yarn or rings or maybe even alone. The yarn or packing rings had to be packed tightly around the shaft, whereby the packing box had to be tightened during service. For this purpose the packing box had a tightenable gland, movable in axial direction. Pack ing seals have in practice been removed from use as obsolete, but they can still be found in use in e.g. as seals for boats' propeller shafts.

Nowadays, single or double acting slide ring seals with sealing surfaces are arranged between the rotating sealing part and the stationary sealing part. The actual sealing members are circular sealing rings made of ceramics or other durable material so that they may be arranged in mechanical contact with each other. Due to this construction these seals are called slide ring seals. The sealing surfaces of the sealing rings are machined very accurately and the sealing effect is based on the clearance remaining between the flat and straight surfaces being so small that the fluid to be pumped cannot flow between the sealing rings. These slide ring seals do, however, require some lubrication and cooling whereby they must be provided with a feed of lubricating and cooling medium. However, the materials used in sealing rings are nowadays very durable and they do even tolerate some dry running, whereby slide ring seals have become very popular in a number of applications.

Element slide ring seals, cartridge seals, modified or integrated seals according to DIN 24690 have been used as double-acting seals for axial sealing of centrifugal pumps and gas blowers. The mechanical designs and sealing liquid connections of these have constructional differences but they have all been designed for use in traditional or traditional-type axially extending sealing cavities. The common and essential features of these seals are that the pairs of slide rings of the seals have been located successively, i.e. one after another on the shaft leaving a sealing liquid cavity therebetween. The sealing liquid ducts are usually arranged in the central part of the sealing liquid cavity.

The design of the above-mentioned double-acting seals causes a number of problems. Due to the successive arrangement of the slide ring pairs of the seal the seal becomes long, whereby the bearing supporting the shaft and the impeller wheel has to be located at a considerable distance from the impeller wheel. Due to this the bearing forces increase and the bearing has to be dimensioned for a larger load. Due to this there is, naturally, a need for a larger and more expensive bearing. A long reach of the shaft leads to a larger bending of the shaft, whereby larger running clearances of the impeller wheel are necessary, leading to a larger leak loss. In order to limit radial forces a so-called double or twin volute or a thicker and more expensive shaft will have to be used. A larger bending of the shaft causes a larger angular error to the slide ring seal that has to be taken into account in the dimensioning and makes it easier for the seal to leak or wear unevenly. All in all, a long sealing structure leads to a structure with a larger and more expensive dimensioning.

SE 408458 discusses a sealing structure where the pairs of slide ring are arranged side by side in radial direction. A rotating slide ring has been arranged on the shaft at a distance from the rotating machine element such that the stationary part of the sealing, i.e. the stationary slide rings as well as the other non rotary parts of the sealing remain between the rotating slide ring and the rotary machine element leaving a narrow gap between themselves and the shaft. The inner side of the stationary, nonrotating sealing part facing the shaft is covered by means of a PTFE sleeve and bellows.

The above discussed sealing structure, though the axial length of the sealing may be somewhat shorter than the ordinary double-acting seal having axially successive pairs of slide rings has a few drawbacks or problems of its own. Firstly, the seal may be used only in such pumping applications that the liquid to be pumped is substantially clean, i.e. it does not contain solids that could fill the narrow gap between the stationary part of the sealing and the shaft. As soon as it is a question of non-clean liquids, the solids in the liquid enter the gap and very quickly wear the stationary PTFE sealing part, Secondly, the fluid as well as impurities or solids entrained possibly in the fluid entering the gap rotate due to the rotation of the shaft, whereby the thus created centrifugal force pushes the fluid against and towards the seal rings. And thirdly, the pump cannot be positioned in an upright position such that its shaft is vertical and the impeller wheel at the lower end of the shaft, as in such a case gas entering the sealing liquid cavity starts filling the cavity from the upper end where the slide rings are located, and the gas cannot escape the sealing liquid cavity but the seal starts running dry.

An object of this invention is to provide a new slide ring seal having a shorter reach in the direction of the shaft surrounded by the seal in comparison to the structures described above.

Another object of the invention is also to provide a structure by means of which it is possible to reduce at least one disadvantage of the known solutions.

The invention is based, on the one hand, on providing the slide ring pairs on the shaft nested one inside the other, and on the other hand, on arranging the rotating body of the slide rings face the impeller wheel, whereby the pairs of slide rings are positioned at the axial end of the sealing closer to the impeller wheel.

According to a preferred embodiment of the present invention the rotating slide surfaces of the seal are arranged on the side of the impeller wheel and the stationary slide rings are arranged on the side of the atmosphere, i.e. on the side of the bearing.

Further, according to an especially preferred embodiment of the present invention the sealing liquid connections are arranged into the end of the sealing liquid cavity on the side of the atmosphere.

According to yet another preferred embodiment of the present invention the pairs of slide surfaces are balanced so that the pressure of the fluid to be pumped may be higher or lower than the pressure of the sealing liquid and the pressure of the sealing liquid may be lower than the atmospheric pressure without causing the slide surfaces to open.

More specifically, the pumping apparatus according to the invention is characterized by what is disclosed in the characterizing part of the independent claim.

Other characterizing features of the pumping apparatus and especially those of the slide ring seal are disclosed in the dependent claims.

Considerable advantages are achieved by means of the invention.

As the slide ring seal according to the invention is short in design, the radial support bearing may be located closer to the impeller wheel, allowing the use of a small impeller wheel running clearance, whereby smaller and less expensive bearings may be used and there is no need to use a double or twin volute for eliminating the radial forces. Further, it is possible to use a thinner and less expensive shaft. Due to the smaller bending of the shaft the seal is more stable and reliable. The sealing cavity, i.e. an open volume between the impeller wheel and the sealing is smaller on the side of the impeller, whereby the flow characteristics of the sealing cavity are better especially for fibre-containing and abrasive liquids. The sealing cavity does not block easily and the fibre-containing liquid is not filtered, neither do the abrasive particles of abrasive liquids accumulate into the sealing cavity to cause abrasion. When the sealing cavity is short (in the axial direction) the friction and the heat generated in the sealing are smaller. The short sealing liquid cavity of the double-acting seal decreases excessive friction and generation of heat (P = speed x shearing force (area x shearing tension)). The volume of the sealing water circulation may be reduced or higher temperatures may be used. The sealing liquid cavity may be formed to be automatically venting, as sealing liquid ducts may easily be arranged into the stationary end of the sealing liquid cavity. This is emphasized when the shaft is arranged in a vertical direction, whereby the slide ring seal of the present invention is self venting.

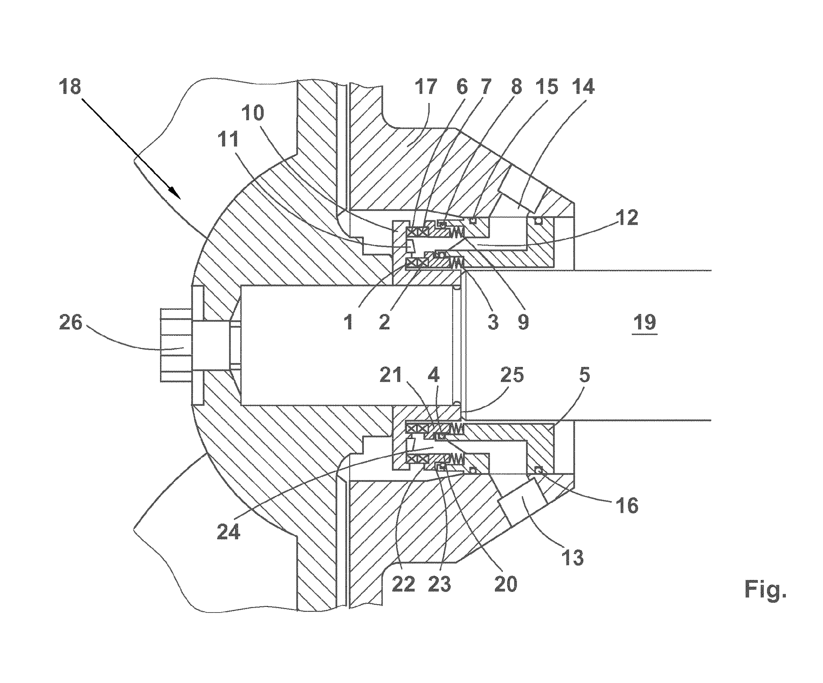

In the following the pumping apparatus and the slide ring seal according to the invention is discussed in more detail with reference to the appended figure showing a slide ring seal according to an advantageous embodiment of the present invention.

In the example of the figure the sealing according to the invention is located in connection with a centrifugal pump. For the invention the application is not important, i.e. the invention may be used in all applications where there is a need for a double-acting seal for sealing an axial flow. The centrifugal pump comprises a pump casing 17 forming the pump body through which the drive shaft 19 passes. An impeller wheel 18 is provided at the end of the drive shaft 19 within a volute attached to the pump casing.

The double-acting slide ring seal is formed of two body parts, i.e. the rotating body part at a first end of the seal and the stationary body part at a second end of the seal. The first end of the seal is facing the impeller wheel 18 and the second end is facing the bearing/s (not shown - at the right in the figure) supporting the shaft of the pump. The rotating body part, i.e. the rotating body 10 is arranged on the shaft 19 between the impeller wheel 18 and a shoulder 25 provided on the shaft 19. The rotating body 10 is tightened between the impeller wheel 18 and the shoulder 25 by means of the nut or bolt 26 used for fastening the impeller wheel 18 at the end of the shaft 19. Thus the rotating body 10 is just behind the impeller wheel 18. The stationary body part 5 at the second end of the seal is fastened to the pump casing 17 farther away from the impeller wheel 18 by means of one or more screws, for instance, such that it leaves between itself and the shaft 19 a clearance so that the shaft may rotate therein without hindrances and the stationary body 5 stays immobile within the pump casing 17. The side of the fluid to be pumped or transferred is often called the side of the impeller and the other side is called the atmospheric side regardless of the outside pressure.

The circular slide rings are located in pairs nested one inside the other to surround the shaft 19. There are two pairs of slide rings, the pairs leaving a sealing liquid cavity 24 therebetween. A first pair, i.e. slide rings having slide surfaces 1 and 2, which are used for separating the sealing liquid cavity 24 from the atmosphere, and a second pair, i.e. slide rings having slide surfaces 6 and 7, which are used for preventing the fluid to be pumped from entering the sealing liquid cavity 24. The rotating slide rings with slide surfaces 1, 6 are arranged in connection with the rotating body 10 so that the inner rotating slide ring with slide surface 1 is located radially closer to the shaft 19 and the outer rotating slide ring with slide surface 6 is located outer, i.e. radially farther away from the shaft. The inner and outer rotating slide surfaces 1 and 6 are preferably arranged at the same radial plane. Thus the first pair of slide rings is closer to the shaft, and the second farther away from the shaft. As the rotating body 10 is fixedly supported to the shaft 19, it rotates with the shaft 19 and correspondingly the rotating slide rings with slide surfaces 1, 6 fixedly supported by the rotating body rotate with the rotating body 10. Together with the slide rings the rotating body 10 forms a structure closed in the direction of the pump casing, i.e. the cavity surrounding the shaft is closed from the shaft up to the radially outer circumference of the rotating body. Stationary slide surfaces 2, 7 are arranged to face the rotating slide surfaces 1, 6 so that the straight and flat mating surfaces formed onto the slide surfaces 1, 2, 6, 7 are facing each other. The space between these surfaces must form a discontinuity allowing the mutual movement while simultaneously fitting together so closely that there is no leakage from between the surfaces. The production of such slide rings is in itself known and they are available and made of various materials and suitable for various fluids to be pumped.

In order to keep the rotating 1, 6 and fixed 2, 7 slide surfaces closely against each other they must be pressed against each other. In this example the pressing force is created by means of springs 3, 9 located between the stationary body 5 and the support bushings 20, 21 of the stationary slide rings 2, 7. These springs 3, 9 ensure the sealing between the slide surfaces of the slide rings in all operating conditions. In order to prevent the pressure of the liquid or gas from having a pressing or separating effect on the slide surfaces the axially moving stationary slide surfaces must be balanced in relation to the pressure of the liquid or gas. This is accomplished by forming shoulders 22, 23 to the bushings 20, 21 of the inner stationary slide surface 2 and the outer stationary slide surface 7. The areas of the shoulders in each bushing are similar whereby the outer bushing is balanced in relation to the pressure of the fluid to be pumped and, correspondingly, the inner bushing is balanced in relation to the pressure of the sealing liquid. Thus pressure fluctuations or relative pressures do not have an effect on the operation of the slide ring seal. Both the inner and the outer support bushing are sealed by means of an 0-ring 4, 8 to the stationary body 5. This body is also sealed by means of an O-ring 16 to the pump casing 17.

A flow of sealing liquid must be arranged to the sealing surfaces in order to lubricate and to cool the slide ring sealing. For this purpose there is a clear gap between the inner and outer bushings and the slide surfaces, the gap forming a sealing liquid cavity 24 together with the cavity located in the stationary body 5. Two bores lead into this cavity from the pump casing 17, one bore forming an inlet duct 13 for the sealing liquid and the other an outlet duct 14 for the sealing liquid. In a horizontal installation the ducts are preferably arranged such that the inlet duct 13 is located beneath the shaft 19 and the outlet duct 14 above the shaft 19. The ducts 13 and 14, lead into the sealing liquid cavity 24 such that the flow of sealing liquid to the first end of the seal i.e. to the end carrying the slide rings is ensured. The circulation of the sealing liquid to the slide rings is needed as the sealing liquid id used to carry away the heat generated by the friction between the slide surfaces. The circulation of the sealing liquid and the flushing of the slide rings may be accomplished by arranging at least one guide vane 12 in the sealing liquid cavity. As in the structure according to the invention there is no need to circulate the sealing liquid at a high speed or pressure, the circulation of the sealing liquid may be taken care of by means of at least one pumping vane 11 fastened to the rotating body and extending into the sealing liquid cavity 24, or at least one groove arranged in the rotating body 10 and opening in the sealing liquid cavity 24. The pumping vane/s or groove/s make the liquid in the sealing liquid cavity rotate, and if the stationary part 5 is provided with one or more guide vanes 12 or grooves directing the rotating flow of sealing liquid, on the one hand, from the sealing liquid cavity towards the outlet duct, and on the other hand, from the inlet duct into the sealing liquid cavity. In each case the structure or the shape of the guiding means may be freely varied according to the examples or otherwise.

In this exemplary embodiment the seal surfaces 1, 2, 6, 7 are aligned with each other in pairs, i.e. they are positioned in a radial plane. They may also be offset in the longitudinal direction of the shaft, but in such a case the design becomes somewhat more complicated and may require more space in the longitudinal direction. Sometimes, however, a small phase shift may be necessary due to structural reasons. It is essential that the sealing slide surfaces are nested one inside the other so that the diameter of the inner pair of slide rings with slide surfaces is smaller than that of the outer pair of slide rings with slide surfaces. Another essential feature of the invention is that the rotating body 10 of the seal faces the impeller wheel, i.e. is arranged at a first end of the sealing to the side of the impeller wheel such that the size or volume of the sealing cavity is minimized. It is especially important that the length of the gap between the seal and the casing of the pump is minimized, as it reduces the friction between those elements as well as the risk of clogging the gap with solids or impurities in the fluid to be pumped. By means of the sealing cavity is understood the more or less open area in front of the pair of the slide rings that is in direct communication with the fluid to be pumped.

In the disclosed example the seal is arranged between the shaft of the pump and the pump casing. For the invention it is not essential between which stationary element and rotating machine element the seal is arranged. It is to be noted that in the above disclosure the invention has only been described using a couple of the most preferred embodiments. They are not, however, meant to limit the application range of the invention in any way, but instead the invention and its range are to be limited by the appended claims only.

## Claims

1. An apparatus for pumping a fluid, the apparatus comprising a casing (17), a shaft (19) supported by bearing means to the casing (17), a pumping means (18) fastened to an end of the shaft (19), and a slide ring seal arranged between the pumping means (18) and the bearing means, the slide ring seal comprising,
- a first end facing the pumping means (18),
- a second end facing the bearing means,
- a first rotating slide ring with a slide surface (1) having a first diameter and being arranged to rotate with the pumping means (18),
- a second rotating slide ring with a slide surface (6) having a second diameter and being arranged to rotate with the pumping means (18),
- the first and the second rotating slide rings being arranged in connection with a rotating body (10),
- a first stationary slide surface (2) arranged against the first rotating slide surface (1) and fastened to a stationary structure,
- a second stationary slide surface (7) arranged against the second rotating slide surface (6) and fastened to a stationary structure,
- the first and the second stationary slide surfaces (1,6) being arranged in connection with a stationary body (5),
- the first rotating slide surface (1) and the first stationary slide surface (2) forming a first pair of slide surfaces,
- the second rotating slide surface (6) and the second stationary slide surface (7) forming a second pair of slide surfaces,
- the first and the second pair of slide surfaces leaving a liquid cavity (24) therebetween,
- the first pair of slide surfaces (1, 2) sealing the liquid cavity (24) from atmosphere, and
- the second pair of slide surfaces (6, 7) sealing the liquid cavity (24) from the fluid to be pumped,
**characterized in that** the rotating body (10) is arranged at the first end of the slide ring seal, and the stationary body (5) at the second end thereof, and that the second pair of slide surfaces (6, 7) sealing the liquid cavity (24) from the fluid to be pumped is located radially outer than the first pair of slide surfaces (1, 2).

2. The apparatus as recited in claim 1, **characterized in that** the second diameter of the second rotating slide surface (6) is larger than that of the first one (1) so that the second pair of slide surfaces (6, 7) is outer than the first pair of slide surfaces (1, 2).

3. The apparatus as recited in claim 1, **characterized in that** the inner and outer rotating slide surfaces (1 and 6) are located in the same radial plane and that the stationary slide surfaces (2 and 7) are located in a corresponding manner.

4. The apparatus as recited in claim 1, **characterized in that** the pairs of rotating slide surfaces (1, 3, 6, 7) are balanced so that the pressure of the fluid to be pumped may be higher or lower than the pressure of the sealing liquid and the pressure of the sealing liquid may be lower than the pressure of the atmospheric pressure without the slide surfaces opening.

5. The apparatus as recited in claim 1, **characterized in that** the rotating body (10) is provided with at least one vane (11) extending into the sealing liquid cavity (24) for rotating sealing liquid in the sealing liquid cavity (24).

6. The apparatus as recited in claim 1, **characterized in that** the rotating body (10) is provided with at least one groove opening into the sealing liquid cavity (24) for rotating sealing liquid in the sealing liquid cavity (24).

7. The apparatus as recited in claim 1, **characterized in that** the sealing liquid cavity (24) is provided at the second end of the slide ring seal with an inlet duct (13) and an outlet duct (14).

8. The apparatus as recited in claim 7, **characterized in that** the sealing liquid cavity (24) is provided with at least one guiding vane (12) for directing the sealing liquid from the sealing liquid cavity (24) towards the outlet duct (14), and from the inlet duct (13) into the sealing liquid cavity (24).

9. The apparatus as recited in claim 1, **characterized in that** the apparatus is a centrifugal pump or a blower.

## Patentansprüche

1. Vorrichtung zum Pumpen eines Fluids, wobei die Vorrichtung ein Gehäuse (17), eine Welle (19), die durch ein Lagermittel an dem Gehäuse (17) gelagert ist, ein Pumpmittel (18), das an einem Ende der Welle (19) befestigt ist, und eine Gleitringdichtung umfasst, die zwischen dem Pumpmittel (18) und dem Lagermittel angeordnet ist, wobei die Gleitringdichtung umfasst
- ein erstes Ende, das dem Pumpmittel (18) zugewandt ist,
- ein zweites Ende, das dem Lagermittel zugewandt ist,
- einen ersten rotierenden Gleitring mit einer Gleitfläche (1), die einen ersten Durchmesser aufweist und angeordnet ist, um mit dem Pumpmittel (18) zu rotieren,
- einen zweiten rotierenden Gleitring mit einer Gleitfläche (6), die einen zweiten Durchmesser aufweist und angeordnet ist, um mit dem Pumpmittel (18) zu rotieren,
- wobei der erste und zweite rotierende Gleitring in Verbindung mit einem rotierenden Körper (10) angeordnet sind,
- eine erste feststehende Gleitfläche (2), die gegen die erste rotierende Gleitfläche (1) angeordnet und an einer feststehenden Struktur befestigt ist,
- eine zweite feststehende Gleitfläche (7), die gegen die zweite rotierende Gleitfläche (6) angeordnet und an einer feststehenden Struktur befestigt ist,
- wobei die erste und die zweite feststehende Gleitfläche (1, 6) in Verbindung mit einem feststehenden Körper (5) angeordnet sind,
- die erste rotierende Gleitfläche (1) und die erste feststehende Gleitfläche (2) ein erstes Paar Gleitflächen bilden,
- die zweite rotierende Gleitfläche (6) und die zweite feststehende Gleitfläche (7) ein zweites Paar Gleitflächen bilden,
- das erste und das zweite Paar Gleitflächen einen Flüssigkeitshohlraum (24) dazwischen belassen,
- das erste Paar Gleitflächen (1, 2) den Flüssigkeitshohlraum (24) gegenüber der Atmosphäre abdichtet, und
- das zweite Paar Gleitflächen (6, 7) den Flüssigkeitshohlraum (24) gegenüber dem zu pumpenden Fluid abdichtet,
**dadurch gekennzeichnet, dass** der rotierende Körper (10) an dem ersten Ende der Gleitringdichtung und der feststehende Körper (5) an deren zweiten Ende angeordnet ist, und dass das zweite Paar Gleitflächen (6, 7), das den Flüssigkeitshohlraum (24) gegenüber dem zu pumpenden Fluid abdichtet, radial weiter außen als das erste Paar Gleitflächen (1, 2) gelegen ist.

2. Vorrichtung nach Anspruch 1,
**dadurch gekennzeichnet, dass** der zweite Durchmesser der zweiten rotierenden Gleitfläche (6) größer ist als der der Ersten (1), so dass das zweite Paar Gleitflächen (6, 7) weiter außen als das erste Paar Gleitflächen (1, 2) liegt.

3. Vorrichtung nach Anspruch 1,
**dadurch gekennzeichnet, dass** die innere und äußere rotierende Gleitfläche (1 und 6) in der gleichen radialen Ebene gelegen sind, und dass die feststehenden Gleitflächen (2 und 7) auf eine entsprechende Weise gelegen sind.

4. Vorrichtung nach Anspruch 1,
**dadurch gekennzeichnet, dass** die Paare rotierender Gleitflächen (1, 3, 6, 7) ausgewogen sind, so dass der Druck des zu pumpenden Fluids höher oder niedriger als der Druck der Abdichtungsflüssigkeit sein kann und der Druck der Abdichtungsflüssigkeit niedriger als der Druck des Umgebungsluftdrucks sein kann, ohne dass sich die Gleitflächen öffnen.

5. Vorrichtung nach Anspruch 1,
**dadurch gekennzeichnet, dass** der rotierende Körper (10) mit zumindest einem Flügel (11) versehen ist, der sich in den Abdichtungsflüssigkeitshohlraum (24) hinein erstreckt, um die Abdichtungsflüssigkeit in dem Abdichtungsflüssigkeitshohlraum (24) in Rotation zu versetzen.

6. Vorrichtung nach Anspruch 1,
**dadurch gekennzeichnet, dass** der rotierende Körper (10) mit zumindest einer Nut versehen ist, die sich in den Dichtungsflüssigkeitshohlraum (24) öffnet, um Abdichtungsflüssigkeit in dem Abdichtungsflüssigkeitshohlraum (24) in Rotation zu versetzen.

7. Vorrichtung nach Anspruch 1,
**dadurch gekennzeichnet, dass** der Abdichtungsflüssigkeitshohlraum (24) an dem zweiten Ende der Gleitringdichtung mit einem Einlasskanal (13) und einem Auslasskanal (14) versehen ist.

8. Vorrichtung nach Anspruch 7,
**dadurch gekennzeichnet, dass** der Abdichtungsflüssigkeitshohlraum (24) mit zumindest einem Führungsflügel (12) zum Lenken der Abdichtungsflüssigkeit aus dem Abdichtungsflüssigkeitshohlraum (24) zum dem Auslasskanal (14) hin und von dem Einlasskanal (13) in den Abdichtungsflüssigkeitshohlraum (24) hinein versehen ist.

9. Vorrichtung nach Anspruch 1,
**dadurch gekennzeichnet, dass** die Vorrichtung eine Zentrifugalpumpe oder ein Gebläse ist.

## Revendications

1. Appareil pour pomper un fluide, l'appareil comprenant une carcasse (17), un arbre (19) supporté par un moyen de palier sur la carcasse (17), un moyen de pompage (18) fixé à une extrémité de l'arbre (19), et un joint annulaire à glissement agencé entre le moyen de pompage (18) et le moyen de palier, le joint annulaire à glissement comprenant :
une première extrémité faisant face au moyen de pompage (18),
une seconde extrémité faisant face au moyen de palier,
une première bague à glissement rotative avec une surface de glissement (1) ayant un premier diamètre et étant agencée pour tourner avec le moyen de pompage (18),
une seconde bague à glissement rotative avec une surface de glissement (6) ayant un second diamètre et étant agencée pour tourner avec le moyen de pompage (18),
la première et la seconde bague à glissement rotative étant agencées conjointement avec un corps rotatif (10),
une première surface de glissement fixe (2) agencée contre la première surface de glissement rotative (1) et fixée à une structure fixe,
une seconde surface de glissement fixe (7) agencée contre la seconde surface de glissement rotative (6) et fixée à une structure fixe,
la première et la seconde surface de glissement fixe (1, 6) étant agencées conjointement avec un corps fixe (5),
la première surface de glissement rotative (1) et la première surface de glissement fixe (2) formant une première paire de surfaces de glissement,
la seconde surface de glissement rotative (6) et la seconde surface de glissement fixe (7) formant une seconde paire de surfaces de glissement,
la première et la seconde paire de surfaces de glissement laissant une cavité de liquide (24) entre elles,
la première paire de surfaces de glissement (1, 2) rendant la cavité de liquide (24) étanche par rapport à l'atmosphère, et
la seconde paire de surfaces de glissement (6, 7) rendant la cavité de liquide (24) étanche par rapport au fluide à pomper,
**caractérisé en ce que** le corps rotatif (10) est agencé au niveau de la première extrémité du joint annulaire à glissement et le corps fixe (5) au niveau de sa seconde extrémité, et **en ce que** la seconde paire de surfaces de glissement (6, 7) rendant la cavité de liquide (24) étanche par rapport au fluide à pomper est positionnée radialement vers l'extérieur par rapport à la première paire de surfaces de glissement (1, 2).

2. Appareil selon la revendication 1, **caractérisé en ce que** le second diamètre de la seconde surface de glissement rotative (6) est plus grand que celui de la première (1) de sorte que la seconde paire de surfaces de glissement (6, 7) est plus à l'extérieur que la première paire de surfaces de glissement (1, 2).

3. Appareil selon la revendication 1, **caractérisé en ce que** les surfaces de glissement rotatives interne et externe (1 et 6) sont positionnées dans le même plan radial et **en ce que** les surfaces de glissement fixes (2 et 7) sont positionnées d'une manière correspondante.

4. Appareil selon la revendication 1, **caractérisé en ce que** les paires de surfaces de glissement rotatives (1, 3, 6, 7) sont équilibrées de sorte que la pression du fluide à pomper peut être supérieure ou inférieure à la pression du liquide d'étanchéité et la pression du liquide d'étanchéité peut être inférieure à la pression de la pression atmosphérique sans l'ouverture des surfaces de glissement.

5. Appareil selon la revendication 1, **caractérisé en ce que** le corps rotatif (10) est prévu avec au moins une pale (11) qui s'étend dans la cavité de liquide d'étanchéité (24) pour faire tourner le liquide d'étanchéité dans la cavité de liquide d'étanchéité (24).

6. Appareil selon la revendication 1, **caractérisé en ce que** le corps rotatif (10) est prévu avec au moins une rainure s'ouvrant dans la cavité de liquide d'étanchéité (24) pour faire tourner le liquide d'étanchéité dans la cavité de liquide d'étanchéité (24).

7. Appareil selon la revendication 1, **caractérisé en ce que** la cavité de liquide d'étanchéité (24) est prévue au niveau de la seconde extrémité du joint annulaire à glissement avec un conduit d'entrée (13) et un conduit de sortie (14).

8. Appareil selon la revendication 7, **caractérisé en ce que** la cavité de liquide d'étanchéité (24) est prévue avec au moins une pale de guidage (12) pour diriger le liquide d'étanchéité de la cavité de liquide d'étanchéité (24) vers le conduit de sortie (14), et du conduit d'entrée (13) dans la cavité de liquide d'étanchéité (24).

9. Appareil selon la revendication 1, **caractérisé en ce que** l'appareil est une pompe centrifuge ou une soufflante.
